Europäisches Patentamt

European Patent Office

Office européen des brevets

(19)

(11) Publication number: **0 330 639**

**A2**

# (12) EUROPEAN PATENT APPLICATION

(21) Application number: **89850067.3**

(22) Date of filing: **24.02.89**

(51) Int. Cl.⁴: **G 05 D 1/02**

(30) Priority: **25.02.88 US 160247**

(43) Date of publication of application:
**30.08.89 Bulletin 89/35**

(84) Designated Contracting States: **DE FR GB IT SE**

(71) Applicant: **NDC AUTOMATION, INC.**
**3101 Latrobe Drive**
**Charlotte North Carolina 28211 (US)**

(72) Inventor: **Holmqvist, Fredrik,**
**5529, Landmark Drive,**
**Charlotte, North Carolina, (US)**

(74) Representative: **Mossmark, Anders et al**
**Albihn West AB Stora Nygatan 15**
**S-411 08 Göteborg (SE)**

(54) **Automatic guided vehicle traffic control system and method.**

(57) A control system for regulating AGV vehicle flow in an AGV system of the type wherein a plurality of AGV vehicles have a guidance system enabling each of the AGV vehicles to follow a path on a floor surface and reduce speed or stop. The control system comprises a passive closed antenna loop positioned adjacent to the path along a length thereof, a vehicle transmitter located on each vehicle for inducing an electromagnetic signal in the antenna loop for only so long as one of the vehicles is positioned on the portion of the path adjacent the antenna loop, and a vehicle receiver located on each vehicle operating in the system.

The receiver is positioned on the vehicle in spaced-apart relation to the vehicle transmitter for sensing the signal induced in the antenna loop and generating an output to the guidance system of the vehicle. A signal is induced in the antenna loop by a first vehicle is detected by the vehicle receiver of a second vehicle when in proximity to the antenna loop and the second vehicle is slowed or stopped as required to avoid a collision between the first and second vehicles. When the first vehicle no longer induces a signal in the antenna loop the second vehicle is permitted to continue along the path.

FIG.2

EP 0 330 639 A2

**Description**

## AUTOMATIC GUIDED VEHICLE TRAFFIC CONTROL SYSTEM AND METHOD

Technical Field and Background of the Invention

This invention relates to an automatic guided vehicle ("AGV") traffic control system and method which independently regulates vehicle flow without requiring intervention from an offboard system controller. Since system controllers are not required, the costs associated with connection wiring, cutting paths in the floor and maintenance of the system are avoided.

In systems of the general type to which this invention relates, a number of AGVs move along a path on a floor. Typical uses for AGVs include stock selection in large warehouses, carriage of automobile chassis during assembly and movement of very heavy objects, such as rolls of newsprint. A guidance system on each vehicle senses the path and regulates speed, direction and related functions of that vehicle along the path. The path may be defined by a wire embedded in or applied to the surface of the floor which carries a guidance signal which is received and processed by the guidance system, or may be defined by electro-optical means such as is disclosed in United States Patent No. 4,626,995, also owned by the present applicant.

Whatever the means of guidance, a system must be provided which prevents collisions between vehicles on the path. There are two distinct functions to be served by a traffic management system. "Blocking" is performed at intersections where two guidepaths cross or merge into a single path. "Buffering" occurs on single sections of the guidepath where a following vehicle is slowed or stopped as required to prevent a collision with a leading vehicle.

Typically, these functions are performed by offboard means, such as a system controller, which keeps track of the location of each of the vehicles. Information concerning the location may be relayed to the system controller by a sensor adjacent the path as a vehicle passes the sensor or by information concerning location transmitted from the vehicle itself as it passes designated places on the path. In either case, the offboard system controller is expensive and typically comprises a computer which requires frequent reprogramming as the vehicle assignments change, and, of course, regular maintenance.

A simpler, less expensive, yet effective traffic control system is disclosed in this application.

Summary of the Invention

Therefore, it is an object of the invention to provide an AGV traffic control system which avoids the use of offboard system controllers.

It is another object of the present invention to provide an AGV traffic control system which permits traffic control using only equipment self-contained on individual vehicles and a passive antenna loop on or in the floor.

It is yet another object of the present invention to provide an AGV traffic control system which can both block and buffer vehicle activity and control vehicle priority on the guidepath.

These and other objects of the present invention are achieved in the preferred embodiments disclosed below by providing a control system for regulating AGV vehicle flow in an AGV system of the type wherein a plurality of AGV vehicles have a guidance system enabling each of the AGV vehicles to follow a path on a floor surface and reduce speed or stop. The control system comprises a passive closed antenna loop positioned adjacent to the path along a length thereof, a vehicle transmitter located on each vehicle for inducing an electromagnetic signal in the antenna loop for only so long as one of the vehicles is positioned on the portion of the path adjacent the antenna loop, and a vehicle receiver located on each vehicle operating in the system.

The receiver is positioned on the vehicle in spaced-apart relation to the vehicle transmitter for sensing the signal induced in the antenna loop and generating an output to the guidance system of the vehicle. A signal is induced in the antenna loop by a first vehicle is detected by the vehicle receiver of a second vehicle when in proximity to the antenna loop and the second vehicle is slowed or stopped as required to avoid a collision between the first and second vehicles. When the first vehicle no longer induces a signal in the antenna loop, the second vehicle is permitted to continue along the path.

According to one preferred embodiment of the invention, a passive closed antenna loop is positioned adjacent to an intersection of the path along a length thereof.

According to another preferred embodiment of the invention, the path includes an intersection of the type where at least two path branches merge to form a single path, and wherein the antenna loop is positioned adjacent the intersection.

According to yet another embodiment of the invention, the path includes an intersection of the type where at least two path branches cross, and wherein the antenna loop is positioned adjacent the intersection.

According to one preferred embodiment of the invention, a plurality of passive closed antenna loops are positioned serially in spaced-apart relation adjacent to the path along a length thereof.

Preferably, the vehicle sensing transmitters of second and successive vehicles induce signals in second and successive respective antenna loops for buffering the second and successive vehicles from following vehicles.

Preferably, the vehicle transmitter is positioned on the trailing end of each of the vehicles relative to the direction of movement of the vehicles and the vehicle receiver is positioned on the leading end of each of the vehicles relative to the direction of movement of the vehicle. The spacing of the antenna loops and the spacing of the vehicle transmitter and the vehicle receiver on each vehicle are such that a given vehicle when receiving a signal from one of the antenna loops also transmits a signal to an adjacent antenna loop for reception by a following vehicle, thereby buffering the vehicles from collision with each other.

According to another preferred embodiment of the invention, first and second vehicle receivers are positioned on opposite ends of each of the vehicles and at least one vehicle transmitter is positioned on each of the vehicles intermediate the first and second vehicle receivers.

According to one preferred embodiment of the invention, one of the at least two branch paths carries a first guidance signal and the other of the branch paths carries a second guidance signal discrete from the first guidance signal, and the vehicle receiver includes means for awarding priority to a predetermined one of the first or second guidance signals.

The method according to the invention comprises the steps of providing a passive closed antenna loop positioned adjacent to the path along a length thereof. An electromagnetic signal is induced onto the antenna loop from a first vehicle for only so long the first vehicle is positioned on the portion of the path adjacent the antenna loop.

A second vehicle senses the presence of the signal induced in the antenna loop, and generates an output to the guidance system of the second vehicle to slow or stop as required to avoid a collision between the first and second vehicles. The second vehicle generates an output to the guidance system of the second vehicle and permits the second vehicle to continue along the path after the first vehicle no longer induces a signal in the antenna loop.

In accordance with another preferred embodiment, the method comprises the steps of providing a passive closed antenna loop positioned adjacent to an intersection of the path along a length thereof and inducing an electromagnetic signal onto the antenna loop from a first vehicle for only so long the first vehicle is positioned on the portion of the path in the vicinity of the intersection adjacent the antenna loop. A second vehicle senses the presence of the signal induced in the antenna loop, and generates an output to the guidance system of the second vehicle to slow or stop the second vehicle as required to avoid a collision between the first and second vehicles as the first vehicle passes through the intersection.

The second vehicle generates an output to the guidance system of the second vehicle and permits the second vehicle to continue along the path and through the intersection after the first vehicle has passed through the intersection and no longer induces a signal in the antenna loop.

In yet another embodiment of the method, the method comprises the steps providing a plurality of passive closed antenna loops positioned serially in spaced-apart relation adjacent to the path along a length thereof and inducing an electromagnetic signal onto a first of the antenna loops from a first vehicle for only so long the first vehicle is positioned on the portion of the path adjacent the first antenna loop.

A second vehicle senses the presence of the signal induced in the antenna loop and generates an output to the guidance system of the second vehicle to slow or stop the second vehicle as required to avoid a collision between the first and second vehicles. The second vehicle generates an output to the guidance system of the second vehicle and permits the second vehicle to continue along the path after the first vehicle no longer induces a signal in first antenna loop.

Preferably, the invention includes the step of inducing signals from second and successive vehicles in second and successive respective antenna loops for buffering the second and successive vehicles from following vehicles.

Brief Description of the Drawings

Some of the objects of the invention have been set forth above. Other objects and advantages of the invention will appear as the description of the invention proceeds when taken in conjunction with the following drawings, in which:

Figure 1 is a top plan and side elevation view of an AGV according to one embodiment of the invention;

Figure 2 is a top plan view of a merge type intersection illustrating the operation of the invention in that environment;

Figure 3 is a top plan view of a crossing type intersection illustrating the operation of the invention in that environment;

Figure 4 is a top plan view of a buffering type control operation along a single guidepath;

Figure 5 is a schematic diagram of the transmitter and receiver arrangement on a bi-directional, differential drive AGV vehicle;

Figure 6 is a schematic diagram of the transmitter and receiver arrangement on a longer bi-directional vehicle;

Figure 7 is a block diagram of the transmitter according to an embodiment of the invention;

Figure 8 is a block diagram of the receiver according to an embodiment of the invention;

Figure 9 is a schematic diagram illustrating how the antenna loop size for a blocking loop is calculated;

Figure 10 is a schematic diagram illustrating how the antenna loop size for a buffering loop is calculated.

Figure 11 is a diagram of an AGV vehicle having certain dimensions; and

Figure 12 is a diagram illustrating a blocking loop calculated according to the diagrams and information in Figures 9, 10 and 11.

Description of the Preferred Embodiment

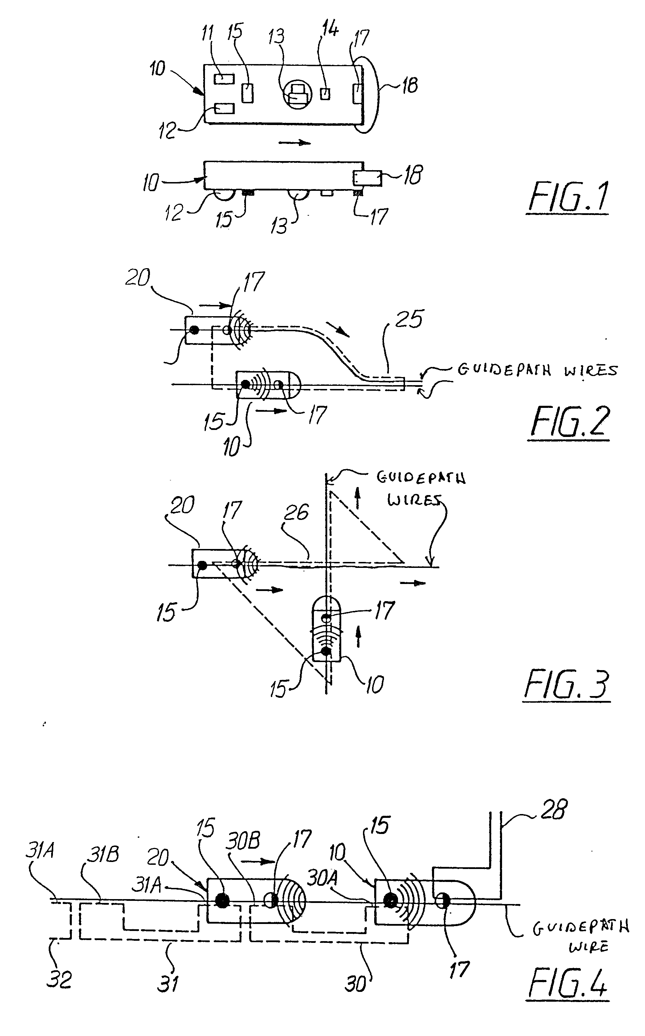

Referring now specifically to the drawings, an AGV of one type according to an embodiment of the present invention is illustrated in Figure 1 and shown generally at reference numeral 10. The particular AGV is a "steer drive" type of vehicle, meaning that the vehicle 10 is supported and rolls on a pair of free rolling wheels 11 and 12 and driven and steered by a separate driving and steering motor and wheel assembly 13. Vehicle 10 is a single direction drive vehicle, meaning that it can travel only in one direction. Steering takes place by the operation of an antenna 14 which senses a wire embedded in or applied to the floor. See Figures 2, 3 and 4. The guidance system of the vehicle 10 turns the steering wheel 13 as required to keep the vehicle 10 centered on the guidepath defined by the wire.

An external command system is used to control the functions of each vehicle, i.e. sending the vehicles to particular locations to load or offload cargo, etc.

Still referring to Figure 1, a vehicle transmitter 15 is positioned near the rear of the vehicle 10 and a vehicle receiver 17 is positioned near the front of vehicle 10. In the preferred embodiment, the transmitter 15 and receiver 17 are mounted 3.5 feet apart. A spring-loaded bumper 18 is interfaced with the vehicle guidance system and stops the vehicle should it collide with some other object.

Referring now to Figure 2, one "blocking" mode of operation of the control system is illustrated. In order to distinguish two vehicles for purposes of explanation, the vehicles are identified as vehicle 10 and vehicle 20. Two guidepath wires carrying vehicles 10 and 20 on separate paths which converge at an intersection. Priority of passage is awarded to the first vehicle to reach a passive antenna loop 25 which is positioned adjacent the guidance wires. As is shown in Figure 2, the loop 25 defines an area in front of the intersection where one of the vehicles 10 or 20 must stop in order to award priority to the other vehicle. Vehicle 10 has reached loop 25 and its transmitter 15 transmits a signal at a predetermined frequency which is received and carried by induction in the loop 25. In accordance with known principles, loop 25 acts as an antenna and transmits the frequency throughout its length. Vehicle 10 continuously transmits the signal so that is carried by loop 25 during the entire time that vehicle 10 is passing over the loop 25. When vehicle 20 arrives at loop 25, the receiver 17, which is positioned on the front, detects the signal induced in loop 25 by vehicle 10. Upon receipt of this signal, vehicle 20 is commanded to stop. Vehicle 20 remains stopped until vehicle 10 clears the loop 25 and the signal being emitted by the transmitter 15 of vehicle is no longer being carried by loop 25. When the signal is no longer received by receiver 17 of vehicle 20, it proceeds forward along the guidance wire. When the transmitter 15 of vehicle 20 reaches a point over loop 25, it induces a signal in loop 25 in exactly the same manner as described above, causing a vehicle on the other branch of the guidance wire to stop so that the passage of vehicle 20 passage through the intersection is protected.

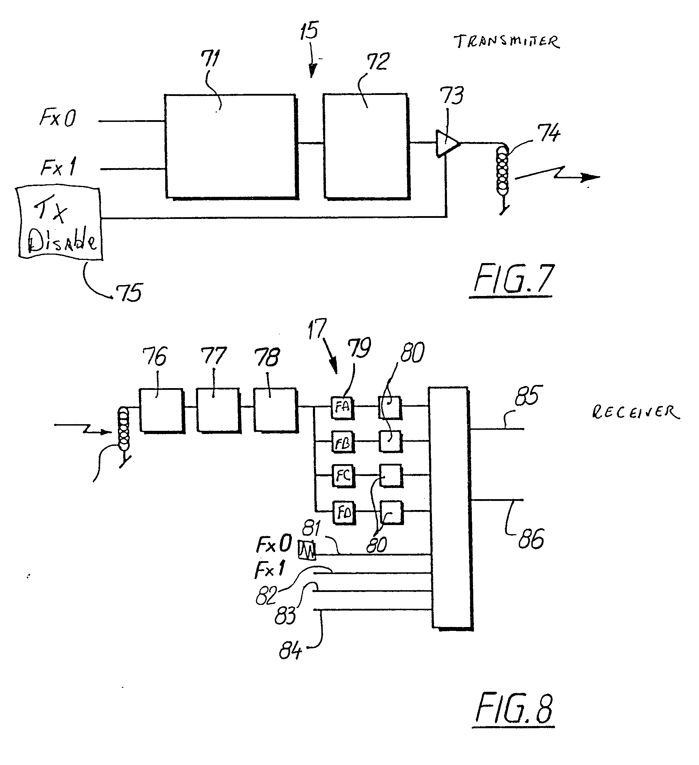

Another blocking mode of operation is illustrated in Figure 3, where two guidepaths intersect at a crossing. A closed antenna loop 26 in a "Figure 8" shape is positioned adjacent both branches of the intersection and defines an area through which one of the vehicles is permitted to pass ahead of the other. The system operates as described above with reference to Figure 2.

In the illustrations above, each guidepath branch operates on a different frequency. A priority can be assigned to either of the frequencies, so that should two vehicles reach the loop 25 or 26 at the same time, only the vehicle on the guidepath with the higher priority frequency is allowed to continue. This is controlled by internal logic in the receiver 17. Once one of the vehicles is given priority, the loop 25 or 26 operates in the same manner to control when the lower priority vehicle is allowed to continue.

The control system according to the invention can also be used to buffer vehicles traveling along a guidepath one after the other. This application is useful in situations where an external command system stops a vehicle at a particular point on the guidepath to, for example, offload cargo. A trailing vehicle must wait until the offloading area has been vacated by the leading vehicle before entering the same area, either to stop also, or merely to pass through on the way to another area.

As is shown in Figure 4, an external system command loop 28 commands vehicle 10 to stop for some system related purpose, such as described above. Three antenna loops 30, 31 and 32 are serially spaced along the guidance path. The spacing is such that a trailing vehicle, such as vehicle 20, stops at a position where adequate clearance is provided between the two vehicles. The antenna loops in Figure 4 are generally "U" shaped in order to limit the area along the guidepath where the signal on the loops may be induced by the transmitter 15 and received by the receiver 17.

As is shown in Figure 4, vehicle 10 is commanded to stop by external system command loop 28. At this position, transmitter 15 is positioned over a segment 30A of loop 30 adjacent the guidewire. While vehicle 10 is stopped, a signal is continuously applied to loop 30. When vehicle 20 arrives over segment 30B of loop 30, its receiver 17 receives and senses the signal induced in loop 30 by the transmitter 15 of vehicle 10 and is commanded to stop. Vehicle 20 remains stopped until vehicle 10 has begun moving and its transmitter 15 has cleared segment 30A. When receiver 17 of vehicle 20 no longer senses the signal in loop 30, vehicle is permitted to proceed. Note that while vehicle 20 is stopped, its transmitter 15 is positioned over a segment 31A of loop 31 and is inducing a signal in loop 31 which will be received by another trailing vehicle whose receiver arrives over segment 31B of loop 31. This system is repeatable any number of desired times and is limited only by the length of the guidepath, the number and size of vehicles and the like.

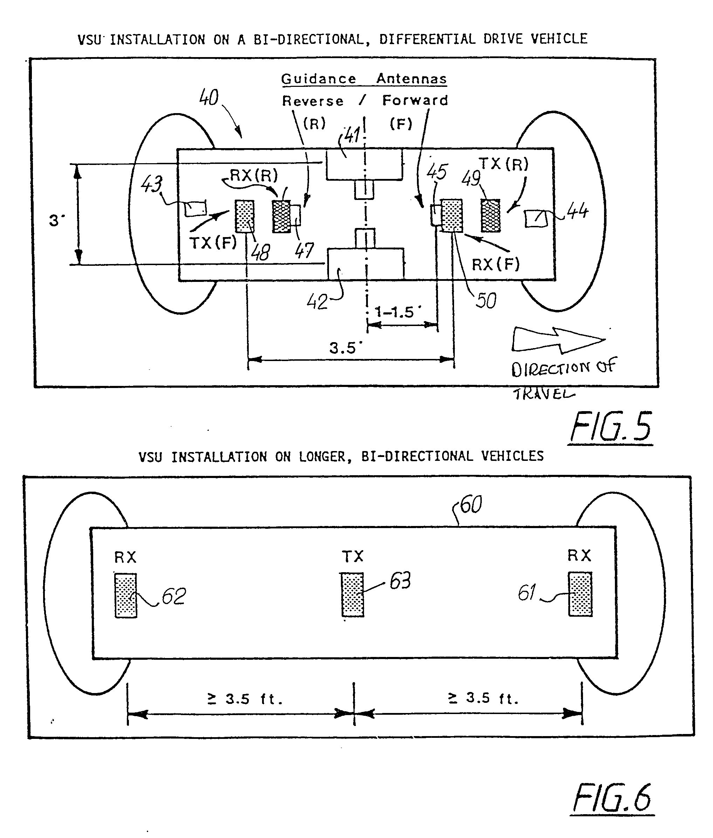

The system may also be used with vehicles which can travel in opposite directions without turning around by merely changing the direction of rotation of the drive wheels. In Figure 5, a bi-directional vehicle 40 is illustrated. Vehicle 40 is a differential drive type vehicle, meaning that it steers by varying the speed of rotation of a first drive wheel 41 relative to the speed of rotation of a second drive wheel 42. Stability is furnished by small caster wheels 43, 44 on opposite ends. Vehicle 40 guides on the guidance wire by means of a forward guidance antenna 45 and a reverse guidance antenna 46.

When moving in the forward direction, the signal is applied to the antenna loop 25 or 26 by a transmitter 48 adjacent one end, and when the vehicle is traveling in the reverse direction, by a transmitter 49 on the opposite end. Likewise, when traveling in the forward direction, the signal induced in loop 25 or 26 is sensed by receiver 50 and when traveling in the reverse direction by a receiver 51.

If the vehicle is long enough, for example over 7 feet in length, a single transmitter may be used. Referring to Figure 6 a vehicle 60 is shown. The drive and guidance systems are as in Figure 5 and are thus omitted. Vehicle 60 has a forward receiver 61 and a reverse receiver 62 positioned, respectively, on its opposite ends. A single transmitter 63 positioned in the middle of vehicle 60 serves in both the forward and reverse directions. As is apparent, transmitter 63 is oriented to the rear of whichever receiver 61 or 62 is in operation and thus the arrangement is functionally equivalent to that shown in the other drawings.

As is apparent from the above description, both blocking and buffering can be performed within the same AGV system. An input to the receiver 17 controls the selection between blocking and buffering. Whether the system is utilized for blocking or buffering, the operating design is basically the same and utilizes the transmission and detection of a signal having a unique frequency.

The transmitter 15 is illustrated schematically in Figure 7. Transmitter 15 comprises a variable frequency generator 71 controlling a frequency shift modulator (FSK) 72. An amplifier 73 boosts the signal and delivers it to a transmitting antenna 74. An input 75 permits the transmitter 70 to be disabled. Four different key frequencies can be selected by binary coded inputs Fx0 and Fx1, as shown below:

| Frequency | Hz | FxO | Fx1 |
|---|---|---|---|
| FA | 1690 | 0 | 0 |
| FB | 1090 | 0 | 1 |
| FC | 725 | 1 | 0 |
| FD | 485 | 1 | 1 |

The carrier frequency from the FSK modulator 72 shifts between 73.5 kc. and 76.5 kc. at the rate of the selected key frequency.

The receiver 17 is shown in Figure 8, and comprises a pick-up antenna 76A, a preamplifier 76, a filter 77 and a phase locked loop 78. Filters 79A-D, inclusive, correspond to the key frequencies transmitted by transmitter 15, and the filtered frequency is delivered via one of four level comparators 80 to a Programmable Read Only Memory ("PROM") which evaluates the stop condition. Frequencies are selected for the receiver by using Fx0 and Fx1 binary inputs as described above through inputs 81 and 82. The receiver 17 is disabled by an input 83. A switch 84 selects between the blocking and buffering mode. A "stop" output delivers a stop command to the vehicle. A "transmitter disable" output 86 operates only in the blocking mode and then acts in conjunction with the stop output 85 to turn off the transmitter whenever a stop condition occurs.

The receiver 17 operates according to the following logic. If receiver senses only the signal transmitted by the transmitter 15 of the same vehicle, then the vehicle can continue. If any other signal is sensed, the receiver commands the vehicle to stop. If its own frequency and any other with a higher priority is present, the vehicle will stop. In all other conditions, the vehicle continues.

The size of the antenna loop 25 or 26 is dependant upon the length of the vehicle, the placement of the transmitter 15 and the receiver 17 on the vehicle and the stopping distance of the vehicle at the speed the vehicle is traveling.

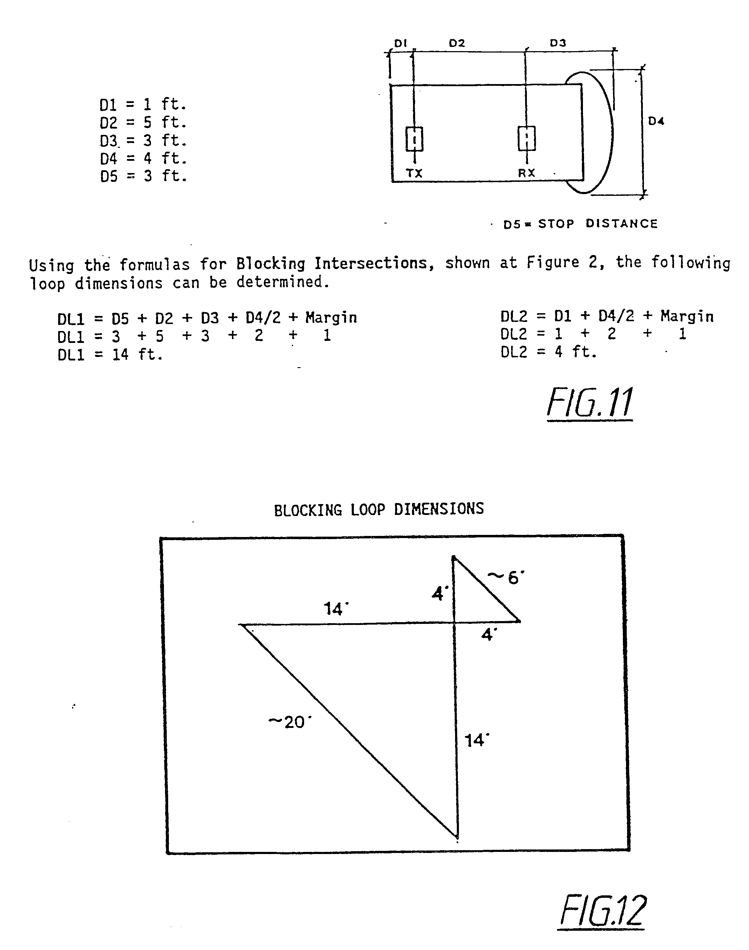

By way of example, Figure 11 illustrates a vehicle having certain dimensions. The formulae below include a "margin" which reflects the distance needed for the vehicle to pass through an intersection.

$DL1 = D5 + D2 + D3 + D4/2 + Margin$, and
$DL2 = D1 + D4/2 + Margin$

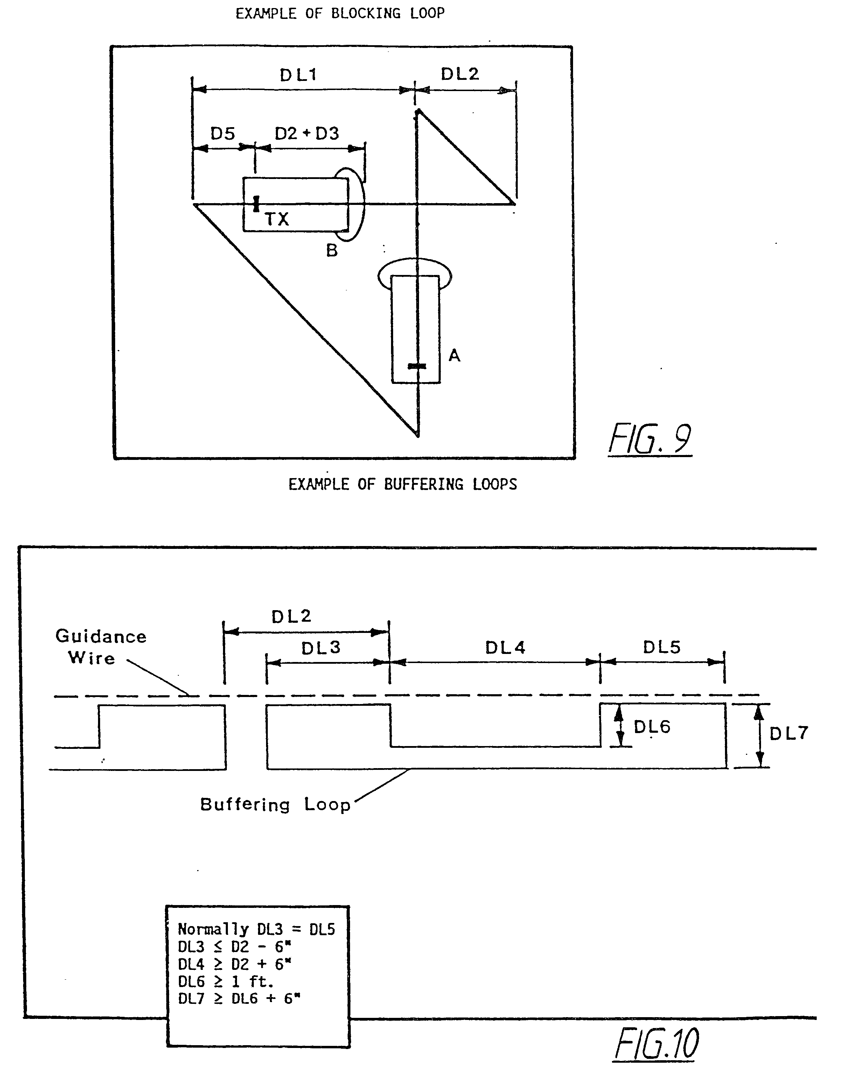

As shown above and in Figure 9, the size of the entry side of the loop (DL1) is determined by D5, the stopping distance of the vehicle, plus the distance from the transmitter to the front of the vehicle plus the margin. The exit side of the loop (DL2) is determined by the distance from the transmitter to the rear of the vehicle plus half the width of the vehicle plus a margin.

In a buffering antenna loop such as is shown in Figure 10, the active part of the loop is shorter than the distance between the transmitter and the receiver, and the opening between the active loops is greater than DL2.

By reference to Figures 11 and 12, a sample calculation of loop size is illustrated. As is shown, the total length of the loop is 62 feet. To provide adequate coupling between the transmitter and receiver, the loop is tuned by a serial resistor and capacitor to obtain a nominal signal level and to cancel the effect to other loops in the floor, for example, guidance loops.

A method and apparatus for regulating AGV vehicle flow in an AGV system is described above. Various details of the invention may be changed without departing from its scope. Furthermore, the foregoing description of the preferred embodiment according to the present invention is provided for the purpose of illustration only and not for the purpose of limitation--the invention being defined by the claims.

**Claims**

1. A control system for regulating AGV vehicle flow in an AGV system of the type wherein a plurality of AGV vehicles have a guidance system thereon enabling each of the AGV vehicles to follow a path on a floor surface and reduce speed or stop, said control system comprising:

(a) a passive closed antenna loop positioned adjacent to said path along a length thereof;

(b) a vehicle transmitter located on each vehicle operating in the system for inducing an electromagnetic signal in said antenna loop for only so long as one of said vehicles is positioned on the portion of the path adjacent the antenna loop;

(c) a vehicle receiver located on each vehicle operating in the system, said receiver being positioned on said vehicle in spaced-apart relation to said vehicle transmitter for sensing the signal induced in the antenna loop and generating an output to the guidance system of said vehicle; whereby a signal induced in said antenna loop by a first said vehicle is detected by the vehicle receiver of a second vehicle when in proximity to said antenna loop and said second vehicle is slowed or stopped as required to avoid a collision between said first and second vehicles, and whereby when said first vehicle no longer induces a signal in said antenna loop said second vehicle is permitted to continue along the path.

2. A control system for regulating AGV vehicle flow in an AGV system of the type wherein a plurality of AGV vehicles have a guidance system thereon enabling each of the AGV vehicles to follow a path on a floor surface and reduce speed or stop, said control system comprising:

(a) a passive closed antenna loop positioned adjacent to an intersection of the path along a length thereof;

(b) a vehicle transmitter located on each vehicle operating in the system for inducing an electromagnetic signal in said antenna loop for only so long as one of each of said vehicles is positioned on the portion of the path adjacent the antenna loop;

(c) a vehicle receiver located on each vehicle operating in the system, said receiver being positioned on said vehicle in spaced-apart relation to said vehicle transmitter for sensing the signal induced in the antenna loop and generating an output signal to the guidance system of said vehicle; whereby a signal induced in said antenna loop by a first said vehicle is detected by the vehicle receiver of a second vehicle when in proximity to said antenna loop and said second vehicle is slowed or stopped as required to avoid a collision between said first and second vehicles, and whereby when said first vehicle no longer induces a signal in said antenna loop said second vehicle is permitted to continue along the path.

3. A control system according to claim 2, wherein said path includes an intersection of the type where at least two path branches merge to form a single path, and wherein said antenna loop is positioned adjacent said intersection.

4. A control system according to claim 2, wherein said path includes an intersection of the type where at least two path branches cross, and wherein said antenna loop is positioned adjacent said intersection.

5. A control system for regulating AGV vehicle flow in an AGV system of the type wherein a plurality of AGV vehicles each having a guidance system thereon follow a path on a floor surface and reduce speed or stop, said control system comprising:

(a) a plurality of passive closed antenna loops positioned serially in spaced-apart relation adjacent to said path along a length thereof;

(b) a vehicle transmitter located on each vehicle operating in the system for inducing an electromagnetic signal in a first of said antenna loops for only so long as one of said vehicles is positioned on the portion of the path adjacent said first antenna loop;

(c) a vehicle receiver located on each vehicle operating in the system, said receiver being positioned on said vehicle in spaced-apart relation to said vehicle transmitter for sensing the signal induced in said first antenna loop and generating an slow or stop output to the guidance system of said vehicle whereby a signal induced in said first antenna loop by a first said vehicle is detected by the vehicle receiver of a second vehicle when in proximity to said antenna loop and said second vehicle is slowed or stopped as required to avoid a collision between said first and second vehicles, and whereby when said first vehicle no longer induces a signal in said antenna loop said second vehicle is permitted to continue along the path, thereby buffering said vehicles from each other.

6. A control system according to claim 5, wherein the vehicle sensing transmitters of second and successive vehicles induce signals in second and successive respective antenna loops for buffering said second and successive vehicles from following vehicles.

7. A control system according to claim 5 or 6, wherein said vehicle transmitter is positioned on the trailing end of each the vehicle relative to the direction of movement of the vehicle and said vehicle receiver is positioned on the leading end of the vehicle relative to the direction of movement of the vehicle, and wherein the spacing of said antenna loops and the spacing of the vehicle transmitter and the vehicle receiver on each vehicle are such that a given vehicle when receiving a signal from one of the antenna loops also transmits a signal to an adjacent antenna loop for reception by a following vehicle, thereby buffering said vehicles from collision with each other.

8. A control system according to claim 1, 2 or 5, and including first and second vehicle receivers positioned on opposite ends of each of said vehicles and at least one vehicle transmitter positioned on each of said vehicles intermediate said first and second vehicle receivers.

9. A control system according to claim 5, wherein said path also includes an intersection of the type where at least two path branches merge to form a single path, and wherein said antenna loop is positioned adjacent said intersection.

10. A control system according to claim 5, wherein said path also includes an intersection of the type where at least two path branches cross, and wherein said antenna loop is positioned adjacent said intersection.

11. A control system according to claim 9 or 10, wherein one of said at least two branch paths carries a first guidance signal and the other of the branch paths carries a second guidance signal discrete from the first guidance signal, and said vehicle receiver includes means for awarding priority to a predetermined one of the first or second frequencies.

12. A method for regulating AGV vehicle flow in an AGV system of the type wherein a plurality of AGV vehicles have a guidance system thereon enabling each of the AGV vehicles to follow a path on a floor surface and reduce speed or stop, said method comprising the steps of:

(a) providing a passive closed antenna loop positioned adjacent to the path along a length thereof;

(b) inducing an electromagnetic signal onto the antenna loop from a first vehicle for only so long said first vehicle is positioned on the portion of the path adjacent the antenna loop;

(c) a second vehicle sensing the presence of the signal induced in the antenna loop;

(d) said second vehicle generating an output to the guidance system of said second vehicle to slow or stop said second vehicle as required to avoid a collision between the first and second vehicles; and

(e) said second vehicle generating an output to the guidance system of said second vehicle and permitting said second vehicle to continue along the path after said first vehicle no longer induces a signal in said antenna loop.

13. A method for regulating AGV vehicle flow in an AGV system of the type wherein a plurality of AGV vehicles have a guidance system thereon enabling each of the AGV vehicles to follow a path on a floor surface and reduce speed or stop, said method comprising the steps of:

(a) providing a passive closed antenna loop positioned adjacent to an intersection of the path along a length thereof;

(b) inducing an electromagnetic signal onto the antenna loop from a first vehicle for only so long said first vehicle is positioned on the portion of the path in the vicinity of the intersection adjacent the antenna loop;

(c) a second vehicle sensing the presence of the signal induced in the antenna loop;

(d) said second vehicle generating an output to the guidance system of said second vehicle to slow or stop said second vehicle as required to avoid a collision between the first and second vehicles as the first vehicle passes through the intersection; and

(e) said second vehicle generating an output to the guidance system of said second vehicle and permitting said second vehicle to continue along the path and through the intersection after said first vehicle has passed through the intersection and no longer induces a signal in said antenna loop.

14. A control system method according to claim 13, wherein said path includes an intersection of the type where at least two path branches merge to form a single path, and wherein said antenna loop is positioned adjacent said intersection.

15. A control system according to claim 13, wherein said path includes an intersection of the type where at least two path branches cross, and wherein said antenna loop is positioned adjacent said intersection.

16. A method for regulating AGV vehicle flow in an AGV system of the type wherein a plurality of AGV vehicles have a guidance system thereon enabling each of the AGV vehicles to follow a path on a floor surface and reduce speed or stop, said method comprising the steps of:

(a) providing a plurality of passive closed antenna loops positioned serially in spaced-apart relation adjacent to the path along a length thereof;

(b) inducing an electromagnetic signal onto a first of said antenna loops from a first vehicle for only so long said first vehicle is positioned on the portion of the path adjacent the said first antenna loop;

(c) a second vehicle sensing the presence of the signal induced in the antenna loop;

(d) said second vehicle generating an output to the guidance system of said second vehicle to slow or stop said second vehicle as required to avoid a collision between the first and second vehicles; and

(e) said second vehicle generating an output to the guidance system of said second vehicle and permitting said second vehicle to continue along the path after said first vehicle no longer induces a signal in first antenna loop.

17. A control sytem method according to claim 16, and including the step of inducing signals from second and successive vehicle in second and successive respective antenna loops for buffering said second and successive vehicles from following vehicles.

18. A control system method according to claim 16, wherein said method includes the step of providing an intersection of the type where at least two path branches merge to form a single path, and wherein said antenna loop is positioned adjacent said intersection.

19. A control system method according to claim 16, wherein said method includes the step of providing an intersection of the type where at least two path branches cross, and wherein said antenna loop is positioned adjacent said intersection.

20. A control system method according to claim 18 or 19, and including the step of providing one of said at least two branch paths with a first guidance signal and the other of the branch paths with a second guidance signal discrete from the first guidance signal, and awarding priority to a predetermined one of the first or second frequencies for permitting the vehicle on the branch path having the higher priority to proceed.

_FIG.1_

GUIDEPATH WIRES

_FIG.2_

GUIDEPATH WIRES

_FIG.3_

GUIDEPATH WIRE

_FIG.4_

VSU INSTALLATION ON A BI-DIRECTIONAL, DIFFERENTIAL DRIVE VEHICLE

FIG.5

VSU INSTALLATION ON LONGER, BI-DIRECTIONAL VEHICLES

FIG.6

TRANSMITTER

*15*

*71* *72* *73* *74*

Fx 0

Fx 1

Tx
Disable

*75*

*FIG.7*

*76* *77* *78* *17* *79* *80* *85*

RECEIVER

FA *80*

FB

FC

FD

Fx 0 *81*

Fx 1

*82*

*83* *86*

*84*

*FIG.8*

EXAMPLE OF BLOCKING LOOP

_FIG. 9_

EXAMPLE OF BUFFERING LOOPS

Normally DL3 = DL5
DL3 ≤ D2 - 6"
DL4 ≥ D2 + 6"
DL6 ≥ 1 ft.
DL7 ≥ DL6 + 6"

_FIG.10_

D1 = 1 ft.
D2 = 5 ft.
D3 = 3 ft.
D4 = 4 ft.
D5 = 3 ft.

· D5 = STOP DISTANCE

Using the formulas for Blocking Intersections, shown at Figure 2, the following loop dimensions can be determined.

DL1 = D5 + D2 + D3 + D4/2 + Margin
DL1 = 3  + 5  + 3  + 2   +  1
DL1 = 14 ft.

DL2 = D1 + D4/2 + Margin
DL2 = 1  + 2    +  1
DL2 = 4 ft.

## FIG.11

## BLOCKING LOOP DIMENSIONS

## FIG.12